# FASCICULE DE BREVET EUROPEEN

(11) **EP 3 398 489 B1**
(45) Date de publication et mention de la délivrance du brevet: **04.12.2019**
(21) Numéro de dépôt: 18169971.1
(22) Date de dépôt: 27.04.2018
(51) Int. Cl.: A47J 31/44

(54) **MACHINE DE PRÉPARATION DE BOISSONS MUNIE D'UN SUPPORT DE RECIPIENT ESCAMOTABLE**
GETRÄNKEZUBEREITUNGSMASCHINE, DIE MIT EINER VERSENKBAREN HALTERUNG FÜR BEHÄLTER AUSGESTATTET IST
BEVERAGE PREPARATION MACHINE PROVIDED WITH A RETRACTABLE CONTAINER SUPPORT

(30) Priorité: 05.05.2017 FR 1753999
(43) Date de publication de la demande: 07.11.2018
(73) Titulaire: SEB S.A., 69130 Ecully (FR)
(72) Inventeur: MORIN, Gilles, 21490 VAROIS ET CHAIGNOT (FR)
(74) Mandataire: Bourrières, Patrice

(56) Documents cités:
- EP-A1- 1 867 260
- EP-A2- 0 549 887
- EP-A2- 2 175 763
- WO-A1-2013/149937

## Description

### Domaine technique

La présente invention concerne une machine de préparation de boissons munie d'un support de récipient qui bascule de sorte à être placé, soit dans une position de réception d'un récipient pour la préparation d'une boisson sous pression à l'unité dans ledit récipient, soit dans une position de rangement permettant le positionnement d'une verseuse ou d'un récipient de plus grande taille, en lieu et place dudit support de récipient.

### Etat de la technique

De telles machines sont connues de l'homme du métier, on citera notamment les demandes de brevet EP0549887, EP1867260, WO2011154492, EP2175763, WO2012007313 et WO2013149937 et le modèle d'utilité CN2737277.

Dans les documents EP0549887, EP1867260, WO2013149937 et CN2737277, la machine comporte un support de tasse qui bascule d'avant en arrière entre une position de réception dans laquelle il peut recevoir une tasse et une position de rangement dans laquelle il est relevé contre ou dans le châssis de la machine pour permettre le positionnement d'une carafe ou d'une plus grosse tasse sur une base.

Dans le document WO2011154492, la machine comporte un support de tasse qui bascule latéralement entre une position de réception dans laquelle il peut recevoir une tasse et une position basculé dans laquelle il est relevé sur le côté du châssis de la machine pour permettre le positionnement d'une plus grosse tasse sur une base.

Dans les documents EP2175763 et WO2012007313, la machine comporte un support de tasse pivotant à plat latéralement entre une position de réception dans laquelle il peut recevoir une tasse et une position pivoté dans laquelle il est disposé sur le côté du châssis de la machine pour permettre le positionnement d'une plus grosse tasse sur une base.

Le déplacement du support de tasse s'effectue en le saisissant avec la main pour le relever ou l'abaisser voire pour le pivoter à plat latéralement. Durant la manipulation du support de tasse, l'utilisateur peut être amené à positionner sa main sous la buse d'écoulement. Lorsque plusieurs boissons sont préparées les unes à la suite des autres dans des récipients différents nécessitant de déplacer le support de tasse, du liquide chaud peut continuer à goutter de la buse ; l'utilisateur peut alors se brûler la main ou tacher la manche de son vêtement en recevant une ou plusieurs gouttes de liquide chaud.

### Résumé de l'invention

La présente invention pallie cet inconvénient. A cet effet, l'invention concerne une machine de préparation de boissons qui permet par exemple la préparation d'une boisson chaude sous pression à l'unité dans un récipient de petite taille ou de grande taille et la préparation d'un café filtre en grande quantité dans une verseuse, voire encore des boissons chaudes lactées et moussées à l'unité dans un récipient.

Selon l'invention, la machine comprend un châssis, un support de récipient et des moyens de déplacement dudit support configurés pour le pivoter vers une position de réception du récipient, par exemple une tasse ou un gobelet, ou vers une position de rangement selon laquelle ledit support est positionné le long du châssis.

La machine comprend également d'autres caractéristiques, notamment un socle, un système de distribution d'eau chaude et un dispositif d'infusion. Le socle comprend une base sur laquelle peuvent être positionnés une verseuse ou un récipient de grande taille. Le système de distribution d'eau chaude comprend par exemple une pompe, un circuit hydraulique et de moyens résistifs permettant de réchauffer l'eau avant sa distribution. Le dispositif d'infusion comprend une chambre d'infusion permettant la réception de dosettes, ainsi qu'une buse qui distribue de la boisson infusée lorsqu'une dosette est placée dans la chambre d'infusion ou de l'eau chaude lorsqu'aucune dosette n'est placée dans la chambre d'infusion. Bien entendu, on pourrait envisager une machine sur laquelle la buse, voire une douchette, serait agencée directement en sortie du système de distribution d'eau chaude, indépendamment de la présence ou non d'un dispositif d'infusion. La buse, voire la douchette, se situe soit au-dessus du support de récipient lorsque celui-ci est en position de réception d'un récipient, soit au-dessus de la base lorsque ledit support de réception est en position de rangement.

Selon l'invention, les moyens de déplacement comprennent un organe de manœuvre assemblé au support de récipient et monté en liaison pivot sur le châssis de sorte que la rotation de l'organe de manœuvre entre une première position et une seconde position permet le basculement du support de récipient de la position de réception vers la position de rangement, et inversement. Ainsi, selon la machine objet de l'invention, la manipulation du support de récipient s'effectue depuis l'organe de manœuvre situé sur le châssis, hors de portée de la buse de la machine.

L'organe de commande est distinct du support de réception.

De manière avantageuse, le support de réception comporte un plateau muni d'une surface destinée à recevoir un récipient de petite taille.

De préférence, la surface est positionnée le long du châssis lorsque le support de récipient est dans la position de rangement.

De préférence, l'organe de manœuvre est agencé en dehors d'un volume défini par une surface verticale, périphérique au plateau lorsque le support de récipient est dans la position de réception. Le récipient est destiné à être reçu dans ce volume.

Ainsi, l'organe de manœuvre est agencé à l'extérieur du plateau, hors de portée d'une buse de distribution de la machine de préparation de boissons.

Selon une réalisation de la machine objet de l'invention, le châssis comprend une zone d'encastrement dans laquelle vient se loger le support de récipient en position de rangement. Cela présente pour avantage de réduire l'encombrement de la machine et de dissimuler complètement le support de récipient en position de rangement, ce qui évite par exemple de heurter malencontreusement ce support de récipient avec un récipient à positionner sur la base. On comprend que cet encastrement du support de récipient dans le châssis est facilité par le fait que la commande dudit support s'effectue au moyen de l'organe de manœuvre, l'utilisateur n'éprouvant aucune difficulté à sortir le support de récipient de la zone d'encastrement malgré la difficulté à le saisir du fait de son encastrement, puisqu'il ne le manipule plus directement mais au moyen de l'organe de manœuvre.

Dans une réalisation préférentielle de la machine, l'organe de manœuvre est agencé à l'extérieur du châssis de sorte à le déporter complètement de la buse.

On pourrait toutefois envisager des variantes de machines avec un organe disposé sur le côté interne du châssis, c'est-à-dire du côté de la base recevant la verseuse ou un récipient de grande taille, en prenant soin dans ce cas de déporter l'organe de manœuvre par rapport à la buse.

Selon la machine objet de l'invention, l'organe de manœuvre est une manette ou un bouton de commande. On pourrait toutefois prévoir d'autres organes de manœuvre sans sortir du cadre de l'invention, par exemple une manette ou un bouton et des organes de transmission de type pignon et roue dentée entre la manette ou le bouton et le support de récipient.

Dans une réalisation de la machine selon l'invention, l'axe de pivotement de l'organe de manœuvre est confondu avec l'axe de pivotement du support de récipient. En outre, l'organe de manœuvre et le support de récipient sont encastrés l'un dans l'autre. On pourrait toutefois prévoir un manchon d'encastrement agencé en complément entre l'organe de manœuvre et le support de récipient. Dans une réalisation préférentielle, l'organe de manœuvre est amovible, le retrait dudit organe permettant le dégagement du support de récipient vis-à-vis du châssis. Cela facilite le nettoyage du support de récipient.

Dans une réalisation de la machine selon l'invention, le support de récipient comprend un corps de forme incurvée et un plateau de réception du récipient.

On pourrait toutefois prévoir des variantes de machines avec un corps plat confondu avec le plateau.

En outre, selon cette réalisation, le châssis comprend préférentiellement une partie concave le long de laquelle est positionné le support de récipient en position de rangement.

Selon l'invention, la machine comprend une verseuse configurée pour être placée sur une base dans la position de rangement du support de récipient. Ainsi, la forme incurvée du corps vient épouser la partie concave du châssis qui est configurée pour recevoir la verseuse reposant sur la base. De cette façon, l'encombrement de la machine peut être réduit à son maximum.

Selon la machine objet de l'invention, les moyens de déplacement comprennent deux butées agencées sur le châssis et configurées pour limiter le pivotement de l'organe de manœuvre lorsqu'il atteint respectivement la première position et la seconde position. Ainsi, le support de récipient s'arrête précisément dans la position de réception ou dans la position de rangement à chaque manipulation de l'organe de manœuvre.

### Brève description des figures

Les caractéristiques et avantages de la machine objet de l'invention apparaîtront à la lecture de la description suivante d'un mode de réalisation s'appuyant sur des figures, parmi lesquelles :
- La figure 1 illustre une vue d'ensemble de la machine multifonction ;
- La figure 2 illustre la machine selon une autre vue, la verseuse étant retirée afin de mettre en évidence le support de récipient en position de rangement ;
- La figure 3 illustre la machine selon une autre vue, la verseuse étant retirée afin de mettre en évidence le support de récipient en position de réception d'un récipient ;
- La figure 4 met notamment en évidence une zone d'encastrement sur le châssis et la position de la liaison pivot mise en œuvre entre le châssis, le support de récipient et l'organe de manœuvre ;
- La figure 5 illustre l'organe de manœuvre assemblé avec le support de récipient ;
- La figure 6 illustre l'organe de manœuvre ;
- La figure 7 illustre le support de récipient.

### Description détaillée

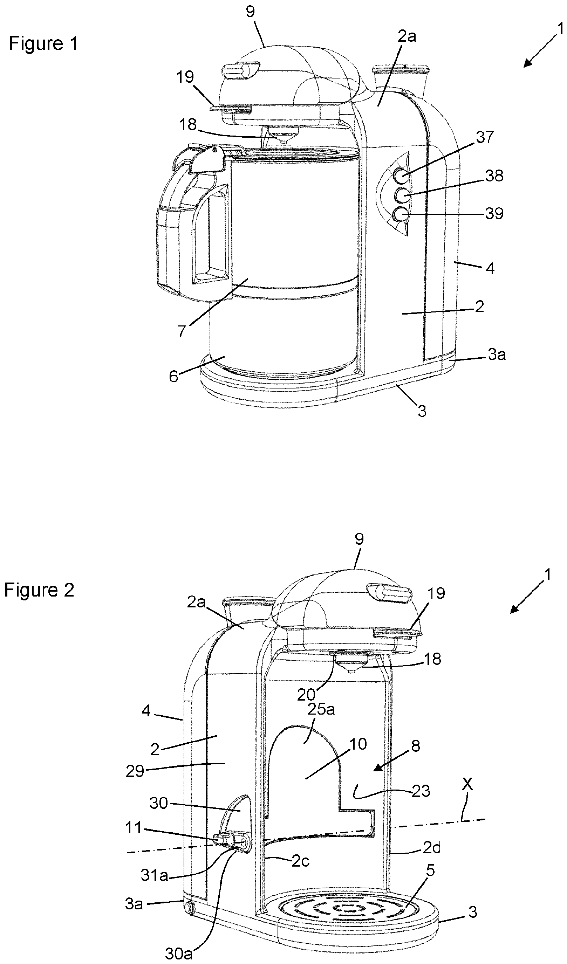

Tel qu'illustré sur la figure 1, la machine 1 comprend un châssis 2, un socle 3 et un réservoir 4. Le châssis 2 reçoit les divers composants électriques, électroniques et hydrauliques, comme cela est le cas sur les machines traditionnelles. Le socle 3 permet de positionner la machine 1 sur un support, par exemple un plan de table ou une tablette. Le réservoir 4 est positionné à l'arrière du châssis 2 et s'étend sur la hauteur dudit châssis 2 ; ce réservoir 4 s'engage sur la partie arrière 3a du socle 3 pour sa connexion à un circuit hydraulique (non illustré) raccordé à une pompe (non illustrée) permettant de puiser l'eau du réservoir et de la faire circuler jusqu'en sortie du circuit hydraulique, un élément résistif (non illustré) permettant de chauffer l'eau durant sa circulation dans le circuit hydraulique. Le circuit hydraulique, la pompe et l'élément résistif sont agencés dans le châssis 2. De telles caractéristiques d'un système de distribution d'eau chaude sont bien connues sur les machines traditionnelles, raison pour laquelle elles ne seront pas détaillées dans la présente description.

Tel qu'illustré en regard des figures 1 à 3, le socle 3 de la machine 1 comprend une base 5 permettant la réception d'une verseuse 6 qui reçoit elle-même un porte-filtre 7. La verseuse 6 et le porte-filtre 7 viennent se loger dans un espace 8 sous une tête 9 agencée en partie supérieure 2a du châssis 2, au-dessus de la base 5. La machine 1 comprend un support de récipient 10 qui est monté en liaison pivot vis-à-vis du châssis 2 de manière à basculer d'une position de rangement illustrée en figure 2, selon laquelle le support de récipient 10 est encastré dans le châssis 2, vers une position de réception d'un récipient, notamment une tasse, selon laquelle le support de récipient 10 est positionné dans l'espace 8 sous la tête 9 et au-dessus de la base 5, plus ou moins à mi-hauteur dans cet espace 8. La manœuvre du support de récipient 10 s'effectue au moyen d'une manette 11 agencée sur le châssis 2.

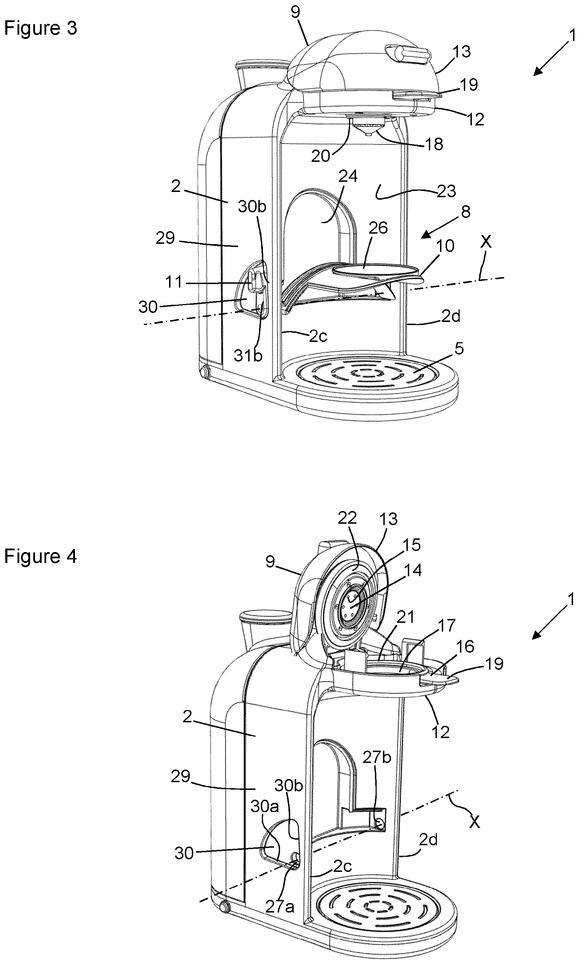

La tête 9 de la machine 1 comprend un corps 12 et un capot 13 articulé pour pivoter d'une position fermé illustrée en figures 1 à 3, vers une position ouvert illustrée en figure 4. Le capot 13 intègre une douchette 14 qui est reliée à la sortie du circuit hydraulique (non illustré). Cette douchette 14 comporte des orifices de distribution 15. Le corps 12 reçoit un support de dosette 16. Le support de dosette 16 comprend une coupelle 17 de forme circulaire permettant la réception d'une dosette (non illustrée) et une buse 18, illustrée en figures 1 à 3, prolongeant vers le bas la coupelle 17 avec laquelle cette buse 18 communique. Ce support de dosette 16 comprend également un manche 19 pour sa manipulation.

Lors du positionnement du support de dosette 16 dans le corps 12, la buse 18 passe au travers d'une ouverture 20 sur ce corps 12 et se positionne sous la tête 9 de manière à être positionnée au-dessus du support de récipient 10 en position de réception ou au-dessus de la base 5, lorsque le support de récipient 10 est en position de rangement, comme l'illustrent les figures 2 et 3.

Lorsque le capot 13 est rabattu contre le corps 12, la tête 9 étant ainsi fermée, la douchette 14 appui étanchement contre un rebord 21 sur la coupelle 17 grâce à un joint d'étanchéité 22, ce qui permet de constituer une chambre d'infusion (non illustrée) à l'intérieur de la tête 9. Lorsque la tête 9 est fermée alors que le support de dosette 16 a été préalablement retiré, les orifices de distribution 15 de la douchette 14 communiquent directement avec l'ouverture 20 sur le corps 12. Cela permet avantageusement plusieurs modes de fonctionnement de la machine 1.

En effet, il est ainsi possible de positionner la verseuse 6 avec son porte-filtre 7 sur la base 5 tandis que le support de récipient est en position de rangement comme illustré dans les figures 1 et 2, la buse 18 déversant de l'eau chaude dans le porte-filtre 7, aucune dosette n'étant placée dans la tête 9.

Il est aussi possible de retirer la verseuse 6 et le porte-filtre 7 pour positionner le support de récipient 10 en position de réception d'un récipient, comme l'illustre la figure 3, la buse 18 déversant la boisson sous pression dans un récipient placé sur le support de récipient 10, après infusion d'une dosette disposée dans le support de dosette 16 à l'intérieur la tête 9.

Il est aussi possible de positionner la machine 1 dans la configuration de la figure 2 et de placer un récipient de grande taille sur la base 5, la buse 18 déversant la boisson infusée sous pression dans ce récipient de grande taille.

Il est également possible de retirer le support de dosette 16 de la tête 9, et de placer un récipient avec du lait liquide ou en poudre sur le support de récipient 10, la douchette 14 produisant de fins jets d'eau qui passent au travers de l'ouverture 20 et se déversent dans le récipient contenant le lait, afin de réchauffer ce lait et de le faire mousser.

Tel qu'illustré en figures 1 à 4, le châssis 2 comprend une paroi interne 23 délimitant l'espace 8 de réception de la verseuse 6 avec son porte-filtre 7. Cette paroi interne 23 est de forme concave dimensionnée pour correspondre avec le diamètre de la verseuse 6 et du porte-filtre 7. La paroi interne 23 comprend une zone d'encastrement 24 permettant le logement du support de récipient 10 dans sa position de rangement.

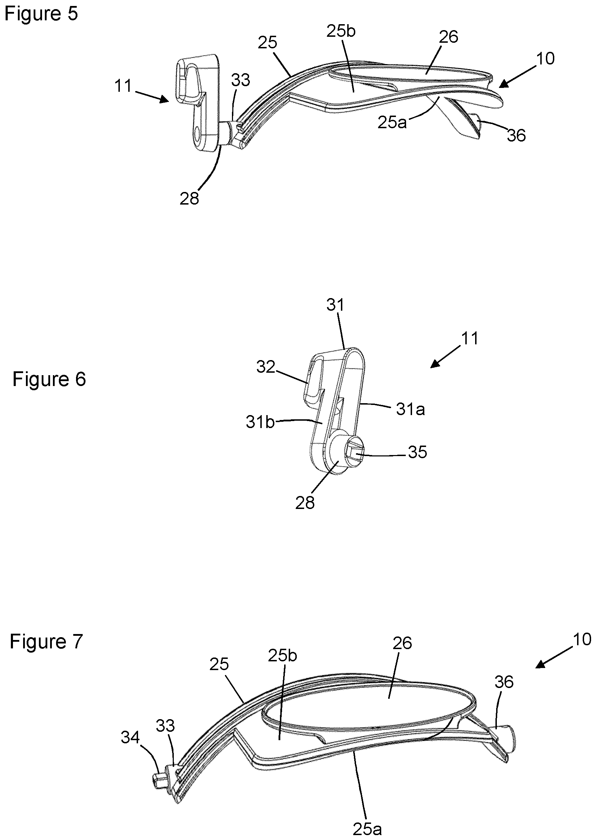

Tel qu'illustré sur les figures 5 et 7, le support de récipient 10 comprend un corps 25 de forme incurvée dont le dimensionnement et la forme correspondent à ceux de la zone d'encastrement 24 et de la paroi interne 23, de sorte que la face inférieure 25a du corps 25 se confonde avec la paroi interne 23 en position de rangement du support de récipient 10, comme l'illustre la figure 2. Le support de récipient 10 comprend également un plateau 26 agencé sur la face supérieure 25b du corps 25, comme l'illustre les figures 5 et 7. Ce plateau 26 permet la réception d'un récipient de petite taille.

Comme l'illustrent les figures 2 et 3, la manette 11 et le support de récipient 10 pivotent selon à un axe X vis-à-vis du châssis 2. Pour cela, le châssis 2 comprend sur ses côtés latéraux 2c, 2d deux orifices de guidage 27a, 27b, illustrés en figure 4. Le premier orifice de guidage 27a reçoit un embout cylindrique 28, illustré en figure 6, qui est agencé sur la manette 11. La paroi externe latérale 29 disposée sur le premier côté latéral 2c du châssis 2 comprend une zone de logement 30 en forme de quart de cercle qui reçoit un bras 31 de la manette 11 lorsque l'embout cylindrique 28 est emboîté dans le premier orifice de guidage 27a. Ce bras 31 se termine par un doigt 32 qui dépasse de la zone de logement 30 afin de permettre la préhension de la manette 11. La zone de logement 30 comprend deux bords 30a, 30b sur lesquels viennent en butée respectivement les côtés latéraux 31a, 31b du bras 31 de la manette 11, ce qui limite le pivotement de la manette 11 et du support de réception 10 afin d'arrêter précisément la position du support de réception 10 en mode de rangement et, surtout, en mode de réception d'un récipient. Cela évite également de forcer sur la manette 11 lorsque le support de récipient 10 a atteint sa position de rangement, afin d'éviter d'endommager cette manette 11.

Tel qu'illustré en regard des figures 4 à 7, le corps 25 du support de récipient 10 comprend un premier embout latéral 33 qui est prolongé par un plot 34 de forme rectangulaire. L'embout cylindrique 28 sur la manette 11 comprend un trou 35 de forme rectangulaire complémentaire à celle du plot 34. Le plot 34 s'emboîte dans le trou 35, comme le montre la figure 5. Le corps 25 du support de récipient 10 comprend un second embout latéral 36, opposé au premier embout latéral 33, comme l'illustre la figure 7. Ce second embout latéral 36, de forme cylindrique, vient se loger dans le second orifice de guidage 27b sur le châssis 2, comme cela apparaît en regard des figures 2 et 3. Le corps 25 du support de récipient 10 est légèrement flexible de manière à permettre sa déformation et le rapprochement de ses deux embout latéraux 33, 36, ce qui permet le positionnement du support de récipient 10 sur le châssis 2. En effet, l'utilisateur met en position la manette 11 sur le châssis 2 en emboîtant l'embout cylindrique 28 dans le premier orifice de guidage 27a, puis il emboîte le second embout latéral 36 du support de récipient 10 dans le second orifice de guidage 27b dudit châssis 2. L'utilisateur exerce ensuite une légère pression sur le corps 25 du support de récipient 10 pour le déformer et permettre l'encastrement du plot 34 dans le trou 35 de la manette 11, disposé selon l'axe X de pivotement. Le démontage du support de récipient 10 peut être réalisé en suivant une procédure inverse à celle qui précède. Ce démontage facilite le nettoyage du support de récipient 10.

La description qui précède n'a aucun caractère limitatif, des variantes pouvant être envisagées dans le cadre de l'invention. On pourrait par exemple remplacer la manette 11 par un autre organe de manœuvre, notamment un bouton de commande disposant d'un embout cylindrique similaire à l'embout cylindrique 28 sur la manette 11. Dans ce cas, des butées seront préférentiellement mises en œuvre entre le bouton de commande et le châssis 2 pour limiter le basculement du support de récipient 10, notamment dans la position de réception illustrée en figure 3.

On peut également envisager une variante de la machine 1 selon laquelle le support de récipient 10 serait simplement rabattu contre la paroi interne 23 sur le châssis 2, sans venir se loger dans une zone d'encastrement 24.

On peut aussi envisager que la machine 1 selon l'invention présente des modes de fonctionnement restreints, en comparaison de ceux présentés dans la description qui précède. Par exemple, cette machine 1 pourrait simplement permettre la préparation de boissons sous pression à l'unité dans un récipient de petite taille disposé sur le support de récipient 10 ou dans un récipient de grande taille disposé sur la base 5.

Concernant la machine 1 multifonction décrite précédemment, permettant notamment la préparation d'un café filtre en grande quantité, la préparation d'une boisson sous pression à l'unité dans un petit ou un grand récipient ou la préparation d'une boisson à base de lait chaud moussé, ces différentes fonctions seront gérées au moyen de touches de commande 37, 38, 39 illustrées en figure 1 et d'une carte électronique de commande (non illustrée) agencée à l'intérieur du châssis 2 et configurée pour actionner la pompe et l'élément résistif du système de distribution d'eau chaude en fonction de la touche de commande sélectionnée.

## Revendications

1. Machine (1) de préparation de boissons comprenant un châssis (2), un support de récipient (10) et des moyens de déplacement dudit support configurés pour le pivoter vers une position de réception du récipient ou vers une position de rangement selon laquelle ledit support est positionné le long du châssis, **caractérisée en ce que** les moyens de déplacement comprennent un organe de manœuvre (11) distinct du support de récipient (10) et assemblé au support de récipient (10), ledit organe de manœuvre étant monté en liaison pivot sur le châssis (2) de sorte que la rotation de l'organe de manœuvre entre une première position et une seconde position permet le basculement du support de récipient de la position de réception vers la position de rangement, et inversement, l'organe de manœuvre (11) étant une manette ou un bouton de commande.

2. Machine (1) selon la revendication 1, dans laquelle le châssis (2) comprend une zone d'encastrement (24) dans laquelle vient se loger le support de récipient (10) en position de rangement.

3. Machine (1) selon l'une des revendications précédentes, dans laquelle l'organe de manœuvre (11) est agencé à l'extérieur du châssis (2).

4. Machine (1) selon l'une des revendications précédentes, dans laquelle l'axe de pivotement (X) de l'organe de manœuvre (11) est confondu avec l'axe de pivotement du support de récipient (10).

5. Machine (1) selon la revendication 4, dans laquelle l'organe de manœuvre (11) et le support de récipient (10) sont encastrés l'un dans l'autre.

6. Machine (1) selon la revendication 5, dans laquelle l'organe de manœuvre (11) est amovible, le retrait dudit organe permettant le dégagement du support de récipient (10) vis-à-vis du châssis (2).

7. Machine (1) selon l'une des revendications précédentes, dans laquelle le support de récipient (10) comprend un corps (25) de forme incurvée et un plateau (26) de réception d'un récipient.

8. Machine (1) selon la revendication 7, dans laquelle le châssis (2) comprend une partie (23) concave le long de laquelle est positionné le support de récipient (10) en position de rangement.

9. Machine (1) selon la revendication 8, laquelle comprend une verseuse (6) configurée pour être placée sur une base (5) dans la position de rangement du support de récipient (10).

10. Machine (1) selon l'une des revendications précédentes, dans laquelle les moyens de déplacement comprennent deux butées (30a, 30b) agencées sur le châssis (2) et configurées pour limiter le pivotement de l'organe de manœuvre (11) lorsqu'il atteint respectivement la première position et la seconde position.

## Patentansprüche

1. Maschine (1) zur Zubereitung von Getränken, umfassend einen Rahmen (2), einen Behälterhalter (10) und Mittel zum Bewegen des Halters, die konfiguriert sind, um ihn in eine Aufnahmeposition des Behälters oder in eine Aufbewahrungsposition zu schwenken, in der der Halter entlang des Rahmens positioniert ist, **dadurch gekennzeichnet, dass** die Mittel zum Bewegen ein Betätigungselement (11) umfassen, das von dem Behälterträger (10) getrennt ist und an dem Behälterträger (10) angebracht ist, wobei das Betätigungselement in Schwenkverbindung an dem Rahmen (2) montiert ist, so dass die Drehung des Betätigungselements zwischen einer ersten Position und einer zweiten Position das Kippen des Behälterträgers von der Aufnahmeposition in die Aufbewahrungsposition und umgekehrt ermöglicht, wobei das Betätigungselement (11) ein Griff oder ein Bedienknopf ist.

2. Maschine (1) nach Anspruch 1, wobei der Rahmen (2) einen Einpassungsbereich (24) umfasst, in dem der Behälterträger (10) in der Aufbewahrungsposition untergebracht ist.

3. Maschine (1) nach einem der vorstehenden Ansprüche, wobei das Betätigungselement (11) außerhalb des Rahmens (2) angeordnet ist.

4. Maschine (1) nach einem der vorstehenden Ansprüche, wobei die Schwenkachse (X) des Betätigungselements (11) mit der Schwenkachse des Behälterträgers (10) zusammenfällt.

5. Maschine (1) nach Anspruch 4, wobei das Betätigungselement (11) oder der Behälterträger (10) in das andere bzw. den anderen eingepasst ist.

6. Maschine (1) nach Anspruch 5, wobei das Betätigungselement (11) entfernbar ist, wobei die Entnahme des Elements das Lösen des Behälterträgers (10) gegenüber dem Rahmen (2) ermöglicht.

7. Maschine (1) nach einem der vorstehenden Ansprüche, wobei der Behälterträger (10) einen Körper (25) mit gekrümmter Form und eine Platte (26) zur Aufnahme eines Behälters umfasst.

8. Maschine (1) nach Anspruch 7, wobei der Rahmen (2) einen konkaven Abschnitt (23) umfasst, entlang dem der Behälterträger (10) in der Aufbewahrungsposition positioniert ist.

9. Maschine (1) nach Anspruch 8, die eine Kanne (6) umfasst, die so konfiguriert ist, um in der Aufbewahrungsposition des Behälterträgers (10) auf einer Basis (5) platziert zu werden.

10. Maschine (1) nach einem der vorhergehenden Ansprüche, wobei die Verschiebungsmittel zwei Anschläge (30a, 30b) umfassen, die an dem Rahmen (2) angeordnet und so konfiguriert sind, dass sie das Schwenken des Betätigungselements (11) begrenzen, wenn es die erste Position bzw. die zweite Position erreicht.

## Claims

1. Machine (1) for preparing beverages comprising a frame (2), a support for a recipient (10) and means for displacing said support configured to pivot it to a position for receiving the recipient or to a storage position according to which said support is positioned along the frame, **characterised in that** the means for displacing comprise a manoeuvring member (11) separate from the support for a recipient (10) and assembled to the support for a recipient (10), said manoeuvring member being mounted as a pivot connection on the frame (2) in such a way that the rotation of the manoeuvring member between a first position and a second position allows for the switching of the support for a recipient from the position for receiving to the storage position, and inversely, the manoeuvring member (11) being a lever or a control button.

2. Machine (1) according to claim 1, wherein the frame (2) comprises an embedding area (24) wherein the support for a recipient (10) is housed in the storage position.

3. Machine (1) according to one of the preceding claims, wherein the manoeuvring member (11) is arranged outside the frame (2).

4. Machine (1) according to one of the preceding claims, wherein the pivot axis (X) of the manoeuvring member (11) is confounded with the pivot axis of the support for a recipient (10).

5. Machine (1) according to claim 4, wherein the manoeuvring member (11) and the support for a recipient (10) are embedded in one another.

6. Machine (1) according to claim 5, wherein the manoeuvring member (11) is removable, the removing of said member allowing for the clearing of the support for a recipient (10) with respect to the frame (2).

7. Machine (1) according to one of the preceding claims, wherein the support for a recipient (10) comprises a curved-shape body (25) and a plateau (26) for receiving a recipient.

8. Machine (1) according to claim 7, wherein the frame (2) comprises a concave portion (23) along which the support for a recipient (10) is positioned in the storage position.

9. Machine (1) according to claim 8, which comprises a serving jug (6) configured to be placed on a base (5) in the storage position of the support for a recipient (10).

10. Machine (1) according to one of the preceding claims, wherein the means for displacing comprise two abutments (30a, 30b) arranged on the frame (2) and configured to limit the pivoting of the manoeuvring member (11) when it reaches respectively the first position and the second position.
